# EUROPEAN PATENT APPLICATION

(11) **EP 1 835 695 A2**
(43) Date of publication of application: **19.09.2007**
(21) Application number: 07005376.4
(22) Date of filing: 15.03.2007
(51) Int. Cl.: H04L 29/06, H04L 12/24

(54) **Methods, devices and computer program products for providing device status information**

(30) Priority: 16.03.2006 US 377794
(71) Applicant: Eaton Power Quality Corporation, Cleveland, OH 44114-2584 (US)
(72) Inventor: Young, Brian R., Raleigh North Carolina 27616 (US)
(74) Representative: Klang, Alexander H.

(57) **Abstract**

Methods, devices and computer program products are provided for remotely obtaining status information associated with a network-enabled device. An information feed associated with status information of a target network-enabled device is selected and associated with a reader. The status information provided in the information feed of the target network-enabled device is received through the reader. Methods, devices and computer program products for providing status information of a network-enabled device are also provided herein.

## Description

### BACKGROUND OF THE INVENTION

The present invention relates generally to network-enabled devices, and more particularly, to remotely monitoring status of network-enabled devices.

With an increased reliance on electronic devices and electronic methods of communication, more and more devices are being configured to connect to communications networks, *i.e.* many devices are network-enabled. For example, many power distribution devices, such as, uninterruptible power supplies (UPSs), are configured to connect to a communications network. Network-enabling a UPS may allow the UPS to be remotely monitored to determine the state of the UPS.

In particular, network-enabled devices are typically configured to log status information associated with the device in a file associated with the device. The status information may include temperature, throughput, status of power and the like. A user may obtain the logged status information by, for example, browsing the device using an appropriate web browser. If the device is simple network management protocol (SNMP) enabled, the user may also obtain the logged status information by waiting for traps to be received by special software or use often complicated network management software to poll the device and report a change in status. Furthermore, the network-enabled device may be further configured to send emails to, for example, a system administrator, including the status information indicating a current condition or change in condition of the device. However, appropriate email server (simple mail transport protocol) and account access may be needed.

### SUMMARY OF THE INVENTION

Some embodiments of the present invention provide methods, devices and computer program products for remotely obtaining status information associated with a network-enabled device. An information feed associated with status information of a target network-enabled device is selected and associated with a reader. The status information provided in the information feed of the target network-enabled device is received through the reader.

In further embodiments of the present invention, the information feed may include an identifier associated with the target network-enabled device, a location of the target network-enabled device and/or a summary of operation status of the target network-enabled device. More detailed status information associated with the target-network-enabled device may be obtained by selecting the summary of operation status.

In still further embodiments of the present invention, the information feed may be selected by copying a link associated with the information feed. Furthermore, the information feed may be associated with a reader by pasting the copied link into the reader.

In some embodiments of the present invention, the target network-enabled device may be an uninterruptible power supply (UPS). Furthermore, the reader may be a really simple syndication (RSS) reader. The information feed may include text in an extensible markup language (XML) format.

Further embodiments of the present invention provide methods, devices and computer program products for providing status information of a network-enabled device. A link to an information feed associated with status information of the network-enabled device is provided on a web page associated with the network-enabled device.

In still further embodiments of the present invention, the information feed may be provided in an XML format. The information feed may be updated on the web page with summary information regarding a change in status of the network-enabled device.

### BRIEF DESCRIPTION OF THE DRAWINGS

Figure 1 is a block diagram of a data processing system suitable for use in some embodiments of the present invention.

Figure 2 is a block diagram of a system including a network-enabled device according to further embodiments of the present invention.

Figure 3 is a block diagram illustrating still further embodiments of the present invention in an exemplary network environment.

Figures 4 through 6 are flowcharts illustrating exemplary operations of devices according to various embodiments of the present invention.

### DETAILED DESCRIPTION OF EMBODIMENTS OF THE INVENTION

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout. As used herein, the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As will be appreciated by one of skill in the art, the invention may be embodied as a method, device, or computer program product. Accordingly, the present invention may take the form of an entirely hardware embodiment, or an embodiment combining software and hardware aspects all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language or in a visually oriented programming environment, such as VisualBasic.

The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The invention is described in part below with reference to a flowchart illustration and/or block diagrams of methods, devices and computer program products according to embodiments of the invention. It will be understood that each block of the illustrations, and combinations of blocks, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

Recent technology, popularized by web blogging and podcasting, may enable users to receive information feeds from web-enabled devices, such that text sent in the form of extensible markup language (XML) is visibly and dynamically updated in a reader, for example, a web browser, such as Mozilla, or stand alone software reader, such as Feedreader. This technology is often called really simple syndication (RSS). According to some embodiments of the present invention, the device status of one or more network-enabled devices may be displayed in the user's reader or web browser using such technology. Accordingly, the changing status of the device may be monitored by conveniently displaying and summarizing device status information on the user's web browser, as will be discussed further herein.

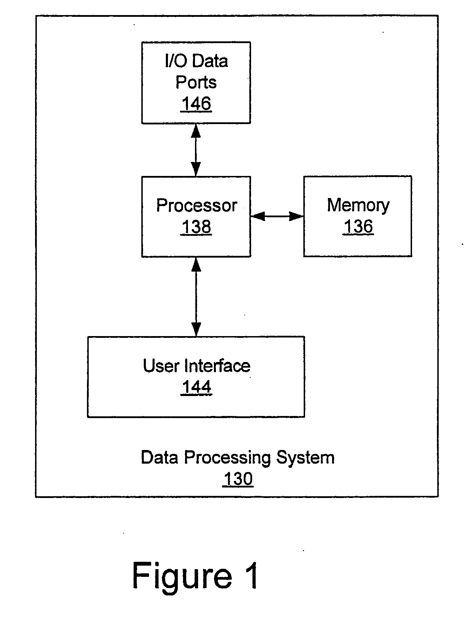

Embodiments of the present invention will now be described with respect to Figures 1 through 6. As discussed herein, embodiments of the present invention provide methods, devices and computer program products for obtaining/providing status information. Network-enabled devices, such as uninterruptible power supplies (UPSs), switches, and the like, are configured to log status information associated therewith. As used herein, "status information" refers to any recordable condition of the network-enabled device, for example, voltage, current, temperature, throughput and the like. Obtaining access to this status information may be difficult and cumbersome. Accordingly, some embodiments of the present invention provide a status information module associated with a network-enabled device that is configured to provide an information feed associated with the status information of the network-enabled device. The information feed may include, for example, an identifier associated with the network-enabled device, a location of the network-enabled device and a summary of the status information associated with the network-enabled device. In some embodiments of the present invention, users, for example, system administrators, may subscribe to the information feed associated with any device of interest. For example, the user may copy a link to the information feed into a reader, such as a really simple syndication (RSS) reader, and receive the status information through the reader. In certain embodiments of the present invention, the user may select the summary of the status information provided in the information feed to reveal more detailed information associated therewith.

Thus, according to some embodiments of the present invention, a system administrator may subscribe to the information feeds associated with devices of interest and periodically receive a summary of status information for the devices of interest. The system administrator may select the summary to obtain more detailed information with respect to the status of a particular device. Therefore, some embodiments of the present invention may provide a relatively easy method of monitoring remote devices, as discussed further herein with respect to Figures 1 through 6.

Referring first to Figure 1, an exemplary embodiment of a data processing system 130 configured in accordance with embodiments of the present invention will be discussed. The data processing system 130, which may be incorporated in a network-enabled device, such as a personal computer, server, power supply, a UPS or the like, may include a user interface 144, for example, input or output device(s) such as a keyboard or keypad, a display, a speaker and/or microphone, and a memory 136 that communicate with a processor 138. The data processing system 130 may further include an I/O data port(s) 146 that also communicates with the processor 138. The I/O data ports 146 can be used to transfer information between the data processing system 130 and another computer system or a network using an Internet protocol (IP) connection. These components may be conventional components such as those used in many conventional data processing systems configured to operate as described herein.

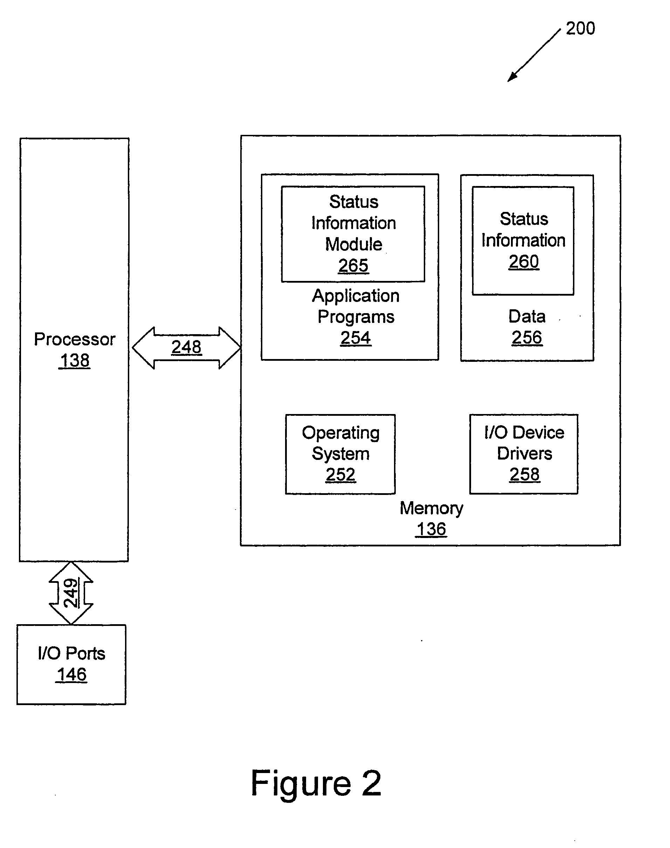

Referring now to Figure 2, a more detailed block diagram of data processing system of Figure 1 according to some embodiments of the present invention will be discussed. The processor 138 communicates with the memory 136 via an address/data bus 248. The processor 138 can be any commercially available or custom microprocessor, microcontroller, digital signal processor or the like. The memory 136 may include any memory devices containing the software and data used to implement the functionality of the data processing system 130. The memory 136 can include, but is not limited to, the following types of devices: cache, ROM, PROM, EPROM, EEPROM, flash memory, SRAM, and DRAM.

As shown in Figure 2, the memory 136 may include several categories of software and data used in the status information module 268: an operating system 252; application programs 254; input/output (I/O) device drivers 258; and data 256. As will be appreciated by those of skill in the art, the operating system 252 may be any operating system suitable for use with a data processing system, such as OS/2, AIX or zOS from International Business Machines Corporation, Armonk, NY, Windows95, Windows98, Windows2000 or WindowsXP from Microsoft Corporation, Redmond, WA, Unix or Linux. The I/O device drivers 258 typically include software routines accessed through the operating system 252 by the application programs 254 to communicate with devices such as the I/O data port(s) 146 and certain memory 136 components. The application programs 254 are illustrative of the programs that implement the various features of the data processing system 200 and preferably include at least one application that supports operations according to some embodiments of the present invention. Finally, the data 256 represents the static and dynamic data used by the application programs 254, the operating system 252, the I/O device drivers 258, and other software programs that may reside in the memory 136.

As illustrated in Figure 2, the data 256 includes status information 260. As discussed above, a network-enabled device may log status information associated with the network-enabled device and store it as status information 260. It will be understood that although a single status information 260 file is illustrated in Figure 2, embodiments of the present invention are not limited to this configuration. For example, multiple status information files may be stored on the network enabled device. For example, a new file may be created each time status information is stored.

As further illustrated in Figure 2, according to some embodiments of the present invention, the application programs 254 include a status information module 265. The status information module 265 may be configured to obtain status information associated with the network-enabled device from the stored status information 260 and provide the obtained status information in an information feed.

While the present invention is illustrated with reference to the status information module 265 being an application program in Figure 2, as will be appreciated by those of skill in the art, other configurations fall within the scope of the present invention. For example, rather than being an application program, the status information module 265 may also be incorporated into the operating system 252 or other such logical division of the data processing system 130. Furthermore, while the status information module 265 is illustrated in a single data processing system, as will be appreciated by those of skill in the art, such functionality may be distributed across one or more data processing systems. Thus, the present invention should not be construed as limited to the configuration illustrated in Figures 1 through 2, but may be provided by other arrangements and/or divisions of function between data processing systems.

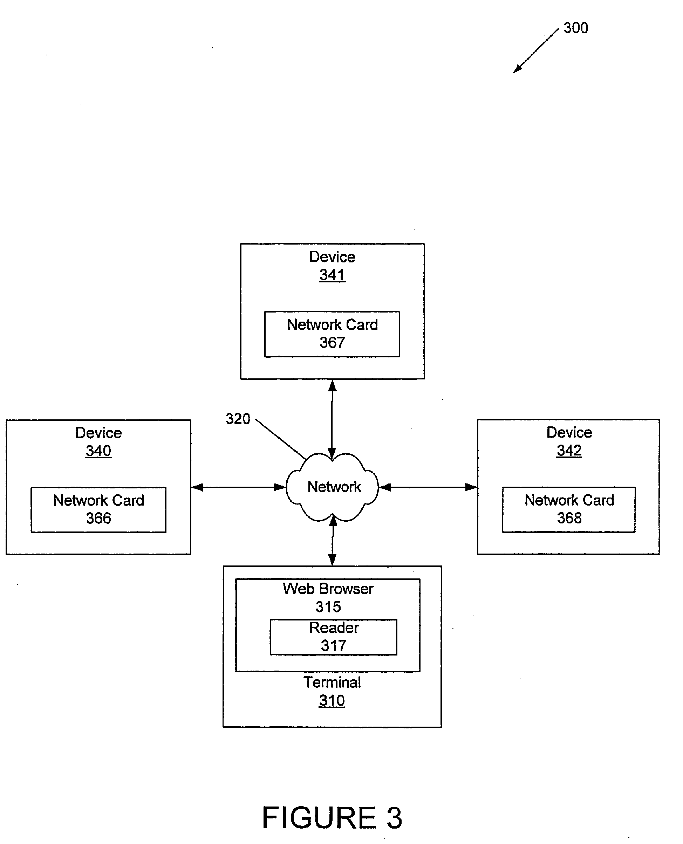

Figure 3 illustrates an exemplary network environment 300 according to some embodiments of the present invention. As illustrated in Figure 3, the network environment 300 may include a terminal 310, a network 320 and one or more network-enabled devices 340, 341 and 342, for example, UPSs. The terminal 310 may be, for example, a laptop computer, a desktop computer, a personal data assistant (PDA), a web capable mobile terminal or any device capable of communicating with the network 320. As illustrated, the terminal 310 may be configured to run a web browser 315, which may include a reader 317 associated therewith. The reader 317 may also be separate from the browser 315 without departing from the scope of the present invention. The terminal 310 may communicate over the network 320, for example, the internet, through a telephone line, a digital subscriber link (DSL), a broadband cable link, a wireless link or the like, with the one or more network-enabled devices 340, 341 and 342.

As further illustrated, the network-enabled devices 340, 341 and 342 may include network cards 366, 367 and 368 that communicate with the network 320. In some embodiments of the present invention, the network cards 366, 367 and 368 may be ConnectUPS Web/SNMP Cards offered by Eaton Power Quality Corporation, the assignee of the present application. The ConnectUPS Web/SNMP Card is configured to install in a device to provide simple network management protocol (SNMP), hypertext transfer protocol (HTTP), simple mail transfer protocol (SMTP), wireless application protocol (WAP) and Telnet compatibility and advanced RS-232 communications. The network card may allow monitoring and management of devices, for example, servers, routers, hubs, UPSs and other key inter-networking devices. ConnectUPS Web/SNMP cards provide a link between the device and, for example, the Ethernet local area/wide area network (LAN/WAN), allowing the device to be remotely monitored and controlled.

Operations according to some embodiments of the present invention will now be discussed with respect to Figures 2 and 3. As discussed above, the network-enabled devices 340, 341 and 342 may include a data processing system 200 discussed above with respect to Figure 2. Thus, the network-enabled devices 340, 341 and 342 may include status information modules 265 configured to provide an information feed associated with the status of the network-enabled device 340, 341 and 342. For example, the status information module 265 may be configured to create an information feed including a device identifier, a device location and/or a summary of the status of the device. The status information module 265 may be further configured to provide the information feed on a web page associated with the network-enabled device 340, 341 and 342. The web page may be viewed by a user, for example, a system administrator, via the web browser 315. The information feed may be provided on the web page as, for example, an RSS or an XML button. These buttons may be given a color, such as orange, to increase visibility.

When the button associated with the information feed is selected, the code, for example, the XML code, behind the information feed may be revealed. The code includes a link to the information feed. The link may be copied and pasted into a reader 317, such as an RSS reader. Once the link is copied into the reader 317, the user will obtain status information associated with the network-enabled device 340, 341 or 342 through the reader 317. In other words, the network-enabled device 340, 341 and 342 may automatically log any changes in the status of the network-enabled device 340, 341, 342 as necessary and the user's reader 317 may obtain the updated status information and display the updated status information therein. For example, a user may receive an information feed including status information each time the network-enabled device 340, 341 and 342 experiences a change in status. In some embodiments of the present invention, the network-enabled device 340, 341 and 342 may be configured to periodically provide status information even if the status information has not changed.

In some embodiments of the present invention, the summary information of the information feed may be visible in, for example, the bookmarks list of the web browser, such as Mozilla, and/or the RSS Reader, such Feedreader. The text of the summary may be short as the visible reader on the user's display may be relatively small compared to the other information on the display. However, clicking on or otherwise selecting on the visible summary information in the reader may direct the web browser 315 to the appropriate summary page of the target network-enabled device 340, 341 and/or 342. Thus, the details are available to the user when needed.

As discussed above, an information feed according to embodiments of the present invention may include, for example, a device identifier, a location of the device and a summary of the status information associated with the device. For example, for a single phase UPS the information feed may provide the following information:
UPS:<UPS Model> at <Card IP Address> Current Status:<Overall Status>.
After viewing this information feed associated with the UPS, the user may click on the visible portion (<Overall Status>) of the information feed and obtain more detailed information associated with the status of the device. It will be understood that the summary may include more detailed information about the status of the device without departing from the scope of the present invention.

For a dual phase UPS, the information feed may provide the following information:
UPS:<UPS Model> at <Card IP Address> reports Load % of <%Load 1>/<%Load2> and Current Status:<Overall Status>.
Finally, for a three phase UPS, the information feed may provide the following information:
UPS:<UPS Model> at <Card IP Address> reports Load (%)of <%Load 1>/<%Load2>/<%Load3> and Current Status:<Overall Status>.
The information provided above for the single, dual and three phase UPSs may already be provided by the ConnectUPS card.

It will be understood that the example discussed above with respect to Figures 1 through 3 is not intended to limit embodiments of the present invention and is provided for exemplary purposes only. Operations according to embodiments of the present invention may include additional steps or omit steps discussed above without departing from the teachings of the present invention. Furthermore, the steps may be combined or performed in a different order than discussed above.

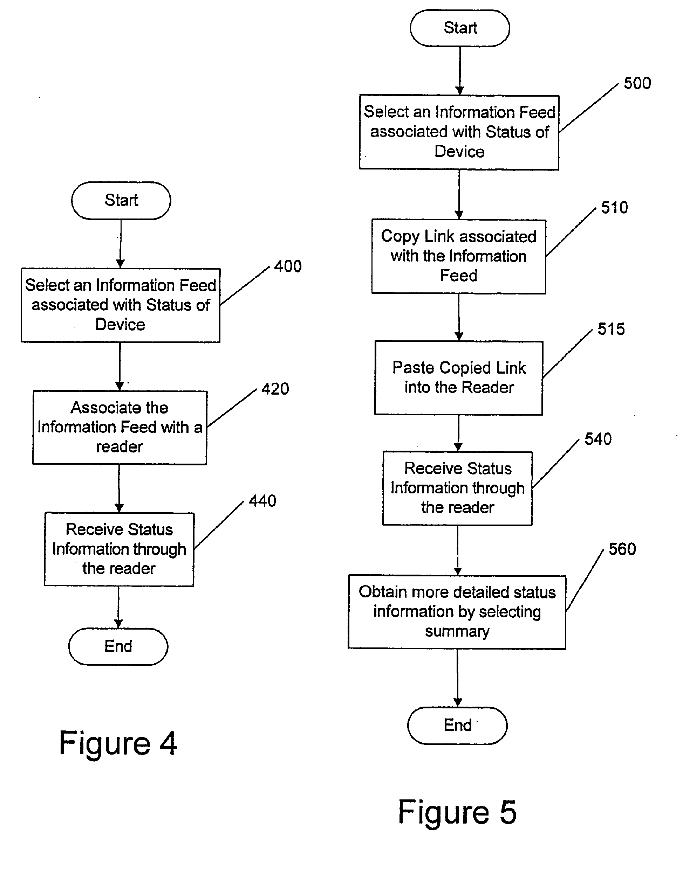

Operations for remotely obtaining status information associated with a network-enabled device will now be discussed further with respect to the flowcharts of Figures 4 and 5. Referring now to Figure 4, operations begin at block 400 selecting an information feed associated with status information of a target network-enabled device. The target network-enabled device may be, for example, a UPS. The information feed may include, for example, an identifier associated with the target network-enabled device, a location of the target network-enabled device and/or a summary of operation status of the target network-enabled device. For example, an RSS or XML button for the information feed may be provided on a web page associated with the network-enabled device. The information feed may be associated with a reader (block 420). For example, when the button for the information feed is selected, the XML code behind the information feed may be revealed. The link to the feed may be copied into the reader, such as a web browser or separate reader, to associate the information feed with the browser/reader. Status information of the target network-enabled device may be provided in the information feed of the target network-enabled device through the reader (block 440). For example, once the link to the information feed is copied into the reader, the summary of the network-enabled device status will be listed in the reader, for example, in a bookmarks list. Each time a status change is detected at the device, the updated status information may be logged by the device and obtained and displayed by the reader. If the user wants more information about the status, the user may select the summary portion and details of the status may be provided.

Referring now to the flowchart of Figure 5, an information feed associated a status of a network enabled device may be selected (block 500). A link associated with the information feed may be copied (block 510) and pasted into a reader (block 515), for example, a web browser. Status information associated with the device may be provided through the reader (block 540). For example, the summary information of the information feed may be displayed in the user's reader. If the user wants more information, the user may obtain more detailed information about the status by selecting the summary information of the information feed (block 560).

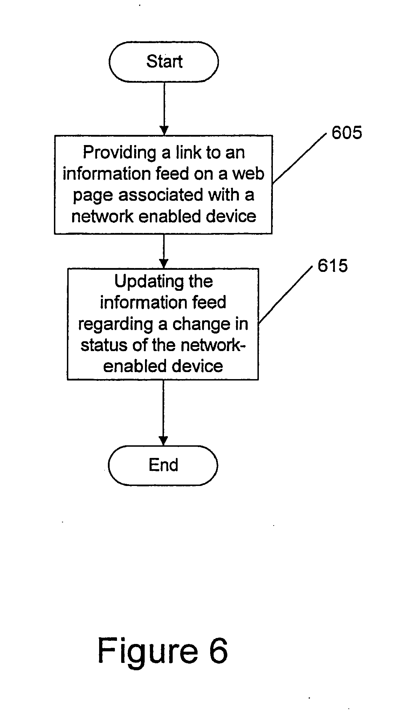

Operations for providing status information of a network-enabled device will now be discussed with respect to the flowchart of Figure 6. A link to an information feed associated with status information of the network-enabled device may be provided on a web page associated with the network-enabled device (block 605). The information feed may have an associated RSS or XML button. When selected, the button may reveal the code behind the information feed including a link to the information feed. A user may copy the link and paste the link into a reader to obtain access to the information feed. The information feed may be updated on the web page with summary information regarding a change in status of the network-enabled device (block 615). In other words, each time the device status changes, the device may log the status update and the readers associated with users who have "subscribed" to the information feed, *i.e.* the users who have copied the link into their reader, may obtain the updated status information.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims, with equivalents of the claims to be included therein.

## Claims

1. A method of remotely obtaining status information associated with a network-enabled device, the method comprising:
selecting an information feed associated with status information of a target network-enabled device;
associating the information feed with a reader; and
receiving the status information provided in the information feed of the target network-enabled device through the reader.

2. The method of Claim 1, wherein the information feed comprises an identifier associated with the target network-enabled device, a location of the target network-enabled device and/or a summary of operation status of the target network-enabled device.

3. The method of Claim 2, further comprising obtaining more detailed status information associated with the target-network-enabled device by selecting the summary of operation status.

4. The method of Claim 1, wherein selecting the information feed comprises copying a link associated with the information feed and wherein associating further comprises pasting the copied link into the reader.

5. The method of Claim 1, wherein the target network-enabled device comprises an uninterruptible power supply (UPS).

6. The method of Claim 1, wherein the reader is a really simple syndication (RSS) reader.

7. The method of Claim 1, wherein the information feed comprises text in an extensible markup language (XML) format.

8. A method of providing status information of a network-enabled device, the method comprising:
providing a link to an information feed associated with status information of the network-enabled device on a web page associated with the network-enabled device.

9. The method of Claim 8, wherein the information feed is provided in an extensible markup language (XML) format.

10. The method of Claim 8, further comprising updating the information feed on the web page with summary information regarding a change in status of the network-enabled device.

11. The method of Claim 8, wherein the information feed comprises an identifier associated with the target network-enabled device, a location of the target network-enabled device and a summary of the operation status of the target network-enabled device.

12. The method of Claim 8, wherein the device comprises a uninterruptible power supply (UPS).

13. A network-enabled device configured to provide status information, the network-enabled device comprising a status information module configured to provide an information feed associated with the status information of the network-enabled device.

14. The network-enabled device of Claim 13, wherein the status information module is further configured to provide a link to the information feed on a web page associated with the network-enabled device.

15. The network-enabled device of Claim 14, wherein the status information is provided in an extensible markup language (XML) format.

16. The network-enabled device of Claim 13, wherein the status information module is configured to allow users to subscribe to the information feed associated with the status information and periodically provide updated status information to the subscribers.

17. The network-enabled device of Claim 16, wherein the subscribers are associated with a reader and wherein the status information module is configured to provide the status information through the reader.

18. The network-enabled device of Claim 14, wherein the device comprises an uninterruptible power supply (UPS).

19. A computer program product configured to provide status information associated with a network-enabled device, the computer program product comprising:
computer readable storage medium having computer readable program code embodied in said medium, the computer readable program code comprising:
computer readable program code configured to provide an information feed associated with the status information of the network-enabled device.

20. The computer program product of Claim 19, wherein the computer readable program code configured to provide further comprises computer readable program code configured to provide the information feed on a web page associated with the network-enabled device.

21. The computer program product of Claim 19, wherein the computer readable program code configured to provide is further configured to provide status information in an extensible markup language (XML) format.

22. The computer program product of Claim 19, further comprising computer readable program code configured to allow users to subscribe to the information feed associated with the status information and periodically provide updated status information to the subscribers.

23. The computer program product of Claim 22, wherein the subscribers are associated with a reader and wherein the computer readable program code configured to provide is further configured to provide the status information through the reader.

24. The computer program product of Claim 19, wherein the device comprises an uninterruptible power supply (UPS).
